# EUROPÄISCHE PATENTANMELDUNG

(11) **EP 1 149 728 A2**
(43) Veröffentlichungstag der Anmeldung: **31.10.2001**
(21) Anmeldenummer: 01109153.5
(22) Anmeldetag: 12.04.2001
(51) Int. Cl.: B60M 1/24

(54) **Fahrdrahtklemme**

(30) Priorität: 25.04.2000 DE 10020265
(71) Anmelder: SIEMENS AKTIENGESELLSCHAFT, 80333 München (DE)
(72) Erfinder: Ganshorn, Rolf-Dieter, 68169 Mannheim (DE)

(57) **Zusammenfassung**

Eine Fahrdrahtklemme, die im montierten Zustand mit ihren Klemmleisten (11, 21) in Eingriff mit den Rillen (101, 102) eines Rillenfahrdrahtes (10) steht, ist dadurch, dass die Fahrdrahtklemme aus Leichtmetall besteht und wenigstens die Klemmleisten (11, 21) zumindest im Bereich ihrer Klemmflächen (110, 210) mit einem gegenüber dem Leichtmetall edleren Metall beschichtet sind, einerseits korrosionsfest und langzeitstabil und andererseits leichter als bekannte Fahrdrahtklemmen.

## Beschreibung

Die Erfindung betrifft eine Fahrdrahtklemme, die im montierten Zustand mit ihren Klemmleisten in Eingriff mit den Rillen eines Rillenfahrdrahtes steht.

Fahrdrahtklemmen dienen bei Oberleitungen dazu, den aus einer Kupferbasislegierung gefertigten Fahrdraht zu halten. Die Fahrdrahtklemme ist hierzu über einen Klemmenhalter an einem Seitenhalter befestigt. Der z. B. aus Stahl, Aluminium oder GFK gefertigte Seitenhalter ist Bestandteil des Oberleitungstragwerkes und dient zur seitlichen Fixierung des Fahrdrahtes zum Gleis. Der Seitenhalter ist einerseits vertikal beweglich, um damit einem Anheben des Fahrdrahtes durch den Stromabnehmer keinen zu starken Widerstand entgegenzusetzen. Andererseits muß der Seitenhalter auch horizontal beweglich sein, um dadurch Wärmeausdehnungen innerhalb der Oberleitung zu ermöglichen. Aufgrund der horizontalen Beweglichkeit des Seitenhalters muß die Fahrdrahtklemme um ihre Hochachse drehbar gehaltert sein.

Unter dem Begriff "Basislegierung" versteht man eine Legierung, bei der die atomistische Struktur durch das Basiselement (beim Fahrdraht Kupfer) vorgegeben ist. Die als Zusatz vorgesehenen Elemente sind in der Basismatrix gelöst oder als weitere Phase ausgeschieden, wobei die weitere Phase den geringeren Volumenanteil hat.

In den bekannten Fällen sind die Fahrdrahtklemmen aus Messing, aus einer CuNiSi-Legierung oder aus einer BronzeLegierung gefertigt. Diese Fahrdrahtklemmen sind relativ schwer und beeinflussen die fahrdynamischen Eigenschaften der Oberleitungsanlage zumindest im Bereich der Fahrdrahtklemmen negativ.

Die Fahrdrahtklemmen aus einem leichteren Material zu fertigen führt jedoch nicht ohne weiteres zum Ziel. Kunststoff bietet aufgrund seiner thermischen Aushärtung nicht die notwendige Langzeitstabilität. Leichtmetalle wie Aluminium oder Aluminium-Legierungen bieten aufgrund der Kontaktes mit den aus Kupferbasislegierungen gefertigten Fahrdrähten nicht die vorgeschriebene Korrosionsfestigkeit.

Aufgabe der vorliegenden Erfindung ist es, eine korrosionsfeste und langzeitstabile Fahrdrahtklemme zu schaffen, die gegenüber den bekannten Fahrdrahtklemmen ein geringeres Gewicht aufweist.

Die Aufgabe wird erfindungsgemäß durch eine Fahrdrahtklemme gemäß Anspruch 1 gelöst. Vorteilhafte Ausgestaltungen der erfindungsgemäßen Fahrdrahtklemme sind jeweils Gegenstand von weiteren Ansprüchen.

Die Fahrdrahtklemme nach Anspruch 1, die im montierten Zustand mit ihren Klemmleisten in Eingriff mit den Rillen eines Rillenfahrdrahtes steht, besteht aus Leichtmetall. Weiterhin sind wenigstens die Klemmleisten zumindest im Bereich ihrer Klemmflächen mit einem gegenüber dem Leichtmetall edleren Metall beschichtet.

Im Rahmen der Erfindung kann es sich bei dem Leichtmetall z. B. um eine Aluminium-Legierung (Anspruch 4) oder um Titan (Anspruch 5) handeln.

Als die derzeit vorteilhafteste Ausführungsform wird eine aus einer Aluminium-Legierung gefertigte Fahrdrahtklemme (Anspruch 4) angesehen, bei der wenigstens die Klemmleisten zumindest im Bereich ihrer Klemmflächen mit Kupfer (Anspruch 6) plattiert sind (Anspruch 7).

Unter dem Begriff "plattieren" wird im Rahmen der Erfindung das sauerstofffreie und damit elektrolytfreie Aufbringen eines gegenüber dem Leichtmetall edleren Metalls auf dem Leichtmetall verstanden. Hierbei entsteht aufgrund der Diffusion an den sich berührenden Grenzflächen beider Metalle eine unlösbare Verbindung. Das Aufbringen des gegenüber dem Leichtmetall edleren Metalls auf dem Leichtmetall kann z. B. durch Aufwalzen von dünnen Metallfolien, durch Aufspritzen, durch Tauchen oder auf elektrolytischem Wege erfolgen.

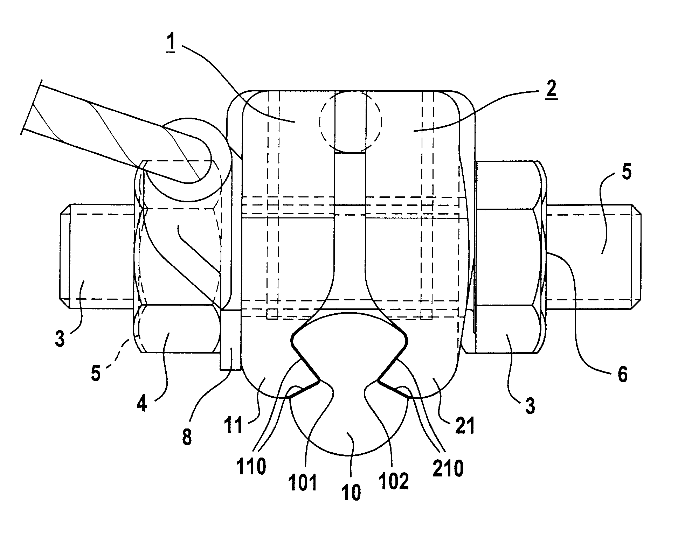

Die Erfindung sowie weitere vorteilhafte Ausgestaltungen werden im Folgenden anhand eines Ausführungsbeispieles in der Zeichnung näher erläutert.

In der Zeichnung, die eine stirnseitige Ansicht der montierten Fahrdrahtklemme zeigt, ist mit 1 ein erstes Klemmenteil und mit 2 ein zweites Klemmenteil bezeichnet. Das erste Klemmenteil 1 weist eine Klemmleiste 11 auf, die sich über die gesamte Länge des ersten Klemmenteiles 1 erstreckt. Das zweite Klemmenteil 2 weist ebenfalls eine Klemmleiste 21 auf, die sich über die gesamte Länge des zweiten Klemmenteiles 2 erstreckt.

Im montierten Zustand hält die Fahrdrahtklemme einen Rillenfahrdraht 10. Die Fahrdrahtklemme steht hierzu mit ihren Klemmleisten 11 und 21 in Eingriff mit den Rillen 101 und 102 des Rillenfahrdrahtes 10.

Die Klemmung des Rillenfahrdrahtes 10 erfolgt dadurch, dass die beiden Klemmenteile 1 und 2 durch zwei Schrauben 3 und 5 mit dem Rillenfahrdraht 10 geklemmt sind. Die beiden Schrauben 3 und 5 sind hierzu jeweils durch eine durchgehende Gewindebohrung und eine dazu korrespondierende durchgehende Bohrung geführt. Beide Schrauben 3 und 5 sind durch jeweils eine Mutter 4 bzw. 6 axial gesichert.

Bei der in der Zeichnung dargestellten Ausführungsform der erfindungsgemäßen Fahrdrahtklemme ist zwischen der Mutter 4 und dem ersten Klemmenteil 1 ein Kabelschuh 8 eines elektrischen Kabels eingeklemmt.

Erfindungsgemäß besteht die Fahrdrahtklemme aus Leichtmetall, vorzugsweise aus einer Aluminium-Legierung. Weiterhin sind wenigstens die Klemmleisten 11 und 21 zumindest im Bereich ihrer Klemmflächen 110 und 210 mit einem gegenüber dem Leichtmetall edleren Metall beschichtet. Die Beschichtung ist in der Zeichnung durch eine dickere Linienstärke symbolisiert.

Bei dem gegenüber der Aluminium-Legierung edleren Metall handelt es sich vorzugsweise um Kupfer, das in vorteilhafter Weise durch plattieren auf die Klemmflächen 110 und 210 aufgetragen wurde.

Die Schrauben 3 und 5 sowie die Muttern 4 und 6 sind zur weiteren Gewichtsreduzierung im gezeigten Ausführungsbeispiel ebenfalls aus einer Aluminium-Legierung gefertigt.

## Patentansprüche

1. Fahrdrahtklemme, die im montierten Zustand mit ihren Klemmleisten in Eingriff mit den Rillen (102, 102) eines Rillenfahrdrahtes (10) steht, **dadurch gekennzeichnet, dass** die Fahrdrahtklemme aus Leichtmetall besteht und wenigstens die Klemmleisten (11, 21) zumindest im Bereich ihrer Klemmflächen (110, 210) mit einem gegenüber dem Leichtmetall edleren Metall beschichtet sind.

2. Fahrdrahtklemme nach Anspruch 1, **dadurch gekennzeichnet, dass** zusätzlich die den Klemmenflächen (110, 210) benachbarten Bereiche mit einem gegenüber dem Leichtmetall edleren Metall beschichtet sind.

3. Fahrdrahtklemme nach Anspruch 1 oder 2, **dadurch gekennzeichnet, dass** es sich bei dem Leichtmetall um eine Leichtmetall-Legierung handelt.

4. Fahrdrahtklemme nach Anspruch 3, **dadurch gekennzeichnet, dass** es sich bei der Leichtmetall-Legierung um eine Aluminium-Legierung handelt.

5. Fahrdrahtklemme nach Anspruch 1 oder 2, **dadurch gekennzeichnet, dass** es sich bei dem Leichtmetall um Titan handelt.

6. Fahrdrahtklemme nach einem der Ansprüche 1 bis 5, **dadurch gekennzeichnet, dass** es sich bei dem gegenüber dem Leichtmetall edleren Material um Kupfer handelt.

7. Fahrdrahtklemme nach einem der Ansprüche 1 bis 6, **dadurch gekennzeichnet, dass** die Beschichtung mit dem gegenüber dem Leichtmetall edleren Material durch Plattieren erzeugt ist.

8. Fahrdrahtklemme nach einem der Ansprüche 1 bis 7, **dadurch gekennzeichnet, dass** die zur Klemmung des Rillenfahrdrahtes (10) dienenden Schrauben (3, 5) und Muttern (4, 6) aus Leichtmetall bestehen.

9. Fahrdrahtklemme nach Anspruch 8, **dadurch gekennzeichnet, dass** es sich bei dem Leichtmetall um eine Leichtmetall-Legierung handelt.

10. Fahrdrahtklemme nach Anspruch 9, **dadurch gekennzeichnet, dass** es sich bei der Leichtmetall-Legierung um eine Aluminium-Legierung handelt.

11. Fahrdrahtklemme nach Anspruch 8, **dadurch gekennzeichnet, dass** es sich bei dem Leichtmetall um Titan handelt.
